# EUROPEAN PATENT APPLICATION

(11) **EP 4 701 160 A1**
(43) Date of publication of application: **25.02.2026**
(21) Application number: 24870188.0
(22) Date of filing: 15.08.2024
(51) Int. Cl.: H04L 67/1095

(54) **METHOD FOR TRANSMITTING DATA, AND ELECTRONIC DEVICE AND SYSTEM**

(30) Priority: 27.09.2023 CN 202311261294
(71) Applicant: Huawei Technologies Co., Ltd., Shenzhen, Guangdong 518129 (CN)
(72) Inventor: GONG, Ashi, Shenzhen, Guangdong 518129 (CN); LI, Shijun, Shenzhen, Guangdong 518129 (CN); WANG, Hancai, Shenzhen, Guangdong 518129 (CN)
(74) Representative: Epping - Hermann - Fischer
(86) International application number: PCT/CN2024/112271
(87) International publication number: WO 2025/066640

(57) **Abstract**

This application provides a data transmission method, an electronic device, and a system. The method is applied to a first electronic device. The method includes: receiving second synchronization information in response to starting a collaborative application, where the second synchronization information is synchronization information of a second electronic device; determining, based on the second synchronization information, whether the first electronic device is collaboratively synchronized with at least one second electronic device; when the first electronic device is collaboratively synchronized with the second electronic device, determining a first data transmission manner based on a quantity of second electronic devices and/or a network status between the first electronic device and the second electronic device; and transmitting to-be-synchronized data to the second electronic device in the first data transmission manner. According to the data transmission method, the electronic device, and the system in this application, whether a current scenario is a collaborative synchronization scenario can be automatically identified, and a specific data transmission manner is determined based on a quantity of electronic devices and/or a network status in the collaborative synchronization scenario, to improve user experience.

## Description

This application claims priority to Chinese Patent Application No. 202311261294.9, filed with the China National Intellectual Property Administration on September 27, 2023 and entitled "DATA TRANSMISSION METHOD, ELECTRONIC DEVICE, AND SYSTEM", which is incorporated herein by reference in its entirety.

### TECHNICAL FIELD

Embodiments of this application relate to the field of electronic devices, and in particular, to a data transmission method, an electronic device, and a system.

### BACKGROUND

With development of science and technology, a user may complete a work or learning task via a plurality of electronic devices. However, task processing of the plurality of electronic devices needs to be based on data transmission. Factors such as data transmission efficiency and a data transmission manner affect user experience of processing the task via the electronic devices. Therefore, how to provide an efficient data transmission manner to improve user experience is an urgent problem to be resolved currently.

### SUMMARY

This application provides a data transmission method, an electronic device, and a system, to provide an efficient data transmission manner in a collaborative synchronization scenario, thereby improving user experience.

According to a first aspect, a data transmission method is provided. The method is applied to a first electronic device, and the method includes: receiving at least one piece of second synchronization information in response to starting a collaborative application, where the at least one piece of second synchronization information is synchronization information of at least one second electronic device, and the at least one piece of second synchronization information is in one-to-one correspondence with the at least one second electronic device; determining, based on the at least one piece of second synchronization information, whether the first electronic device is collaboratively synchronized with the at least one second electronic device; when the first electronic device is collaboratively synchronized with the at least one second electronic device, determining a first data transmission manner based on a quantity of second electronic devices and/or a network status between the first electronic device and the second electronic device; and transmitting to-be-synchronized data to the at least one second electronic device in the first data transmission manner.

For example, the collaborative application may be an application that supports a collaborative synchronization function, for example, a drawing application or a file application. A data ID may indicate information such as a page, a picture, or text that is currently displayed (or opened) on an electronic device.

It should be noted that the first electronic device may send first synchronization information to the at least one second electronic device or send first synchronization information to a cloud server in response to an operation of starting the collaborative application by a user. The first synchronization information is synchronization information of the first electronic device. In addition, the first electronic device may receive the at least one piece of second synchronization information from the at least one second electronic device, or may receive the at least one piece of second synchronization information from the cloud server.

It should be noted that when the collaborative application is started, upload and download of synchronization information may be triggered. Alternatively, to reduce power consumption, updated synchronization information may be transmitted when data changes. For example, a picture of the drawing application is displayed on the first electronic device. When the user modifies the picture via the device, the first electronic device may upload a modified data ID to the cloud server. The modified data ID may indicate a modified picture.

Based on the foregoing solution, whether a plurality of electronic devices are in a collaborative synchronization scenario can be determined, and a specific data transmission manner (transmission strategy) can be determined based on a quantity of electronic devices and/or a network status in the collaborative synchronization scenario, so that a data synchronization delay is low, power consumption is low, and efficiency is high in the collaborative synchronization scenario, to ensure good user experience.

With reference to the first aspect, in some implementations of the first aspect, the synchronization information includes an identifier ID of an electronic device, an ID of the collaborative application, and a data ID, and the data ID indicates data displayed on the electronic device.

With reference to the first aspect, in some implementations of the first aspect, before determining the first data transmission manner based on the quantity of second electronic devices and/or the network status between the first electronic device and the second electronic device, the method further includes: determining the quantity of second electronic devices based on the at least one piece of second synchronization information; and determining the network status between the first electronic device and the second electronic device based on the at least one piece of second synchronization information.

It may be understood that, when the first electronic device receives one piece of second synchronization information, the first electronic device may determine that the quantity of second electronic devices is 1; or when the first electronic device receives two pieces of second synchronization information, the first electronic device may determine that the quantity of second electronic devices is 2. In other words, the first electronic device may determine the quantity of second electronic devices based on a quantity of received pieces of second synchronization information. In addition, because the synchronization information includes the ID of the electronic device, the first electronic device may further determine, based on the ID of the electronic device in the second synchronization information, an ID of the second electronic device corresponding to the second synchronization information.

It should be noted that the network status includes near field communication, far field communication, or near field communication and far field communication. Simply speaking, a near field and a far field may be relative concepts in terms of a communication distance. If a distance between two electronic devices is short, the two electronic devices may be in a near field network state. If a distance between two electronic devices is long, the two electronic devices may be in a far field network state. When the first electronic device is collaboratively synchronized with at least two second electronic devices, both the near field network state and the far field network state may exist.

With reference to the first aspect, in some implementations of the first aspect, before determining the quantity of second electronic devices based on the at least one piece of second synchronization information, the method further includes: based on consistency of an ID of a collaborative application in first synchronization information with the ID of the collaborative application in the at least one piece of second synchronization information, and consistency of a data ID in the first synchronization information with the data ID in the at least one piece of second synchronization information, determining that the first electronic device is collaboratively synchronized with the at least one second electronic device, where the first synchronization information is synchronization information of the first electronic device.

It should be noted that when a same collaborative application and same data are displayed at front ends of the first electronic device and the second electronic device, it may be considered that the first electronic device and the second electronic device are in the collaborative synchronization scenario. In the collaborative synchronization scenario, the first electronic device and the second electronic device synchronize data and share resources. In addition, for a plurality of collaboratively synchronized electronic devices, tasks of two electronic devices may be completed on one electronic device via one peripheral device (for example, a mouse or a keyboard).

It may be understood that the first electronic device is collaboratively synchronized with the second electronic device, and content displayed on the first electronic device is consistent with content displayed on the second electronic device. When content displayed on one electronic device changes, content displayed on the other electronic device also changes accordingly.

With reference to the first aspect, in some implementations of the first aspect, when the quantity of second electronic devices is 1, and the network status between the first electronic device and the second electronic device is the near field network state, transmitting the to-be-synchronized data to the at least one second electronic device in the first data transmission manner includes: sending the to-be-synchronized data to a third electronic device, where the third electronic device is one of the at least one second electronic device.

It should be noted that when the quantity of second electronic devices is 1, a quantity of collaborative devices is 2, and the collaborative devices include the first electronic device and the third electronic device. In addition, when the first electronic device and the third electronic device are in the near field network state, data can be directly transmitted in a device to device manner. In other words, the first electronic device directly sends the to-be-synchronized data to the third electronic device.

For example, the two collaborative devices in the near field network state may preferably transmit data through a distributed soft bus.

In contrast, if the two collaborative devices in the near field network state transmit data in a server forwarding manner, a quantity of hops for the first electronic device to complete data synchronization is 2. To be specific, the first electronic device needs to first send the to-be-synchronized data to the server, and then the server forwards the to-be-synchronized data to the third electronic device. It can be learned that, when the two collaborative devices are in the near field network state, a quantity of hops for transmitting data through the distributed soft bus is clearly less. A smaller quantity of hops indicates fewer resources for transmitting data and a lower delay. Therefore, in some scenarios, a data transmission manner with a smaller quantity of hops is preferred.

Based on the foregoing solution, the two collaborative devices in the near field network state may improve data transmission efficiency in the device to device manner, and improve user experience of collaboratively processing a work task via the electronic devices.

With reference to the first aspect, in some implementations of the first aspect, when the quantity of second electronic devices is 1, and the network status between the first electronic device and the second electronic device is the far field network state, transmitting the to-be-synchronized data to the at least one second electronic device in the first data transmission manner includes: sending the to-be-synchronized data to a third electronic device via the server, where the third electronic device is one of the at least one second electronic device.

It should be noted that when the quantity of second electronic devices is 1, a quantity of collaborative devices is 2, and the collaborative devices include the first electronic device and the third electronic device. In addition, when the first electronic device and the third electronic device are in the far field network state, data cannot be transmitted in a device to device manner, and data may be transmitted in a device to cloud manner. In other words, the first electronic device forwards the to-be-synchronized data to the third electronic device via the server. When the two collaborative devices are in the far field network state, a quantity of hops for the first electronic device to complete data synchronization is 2. It can be learned that even if the quantities of collaborative devices are the same, different data transmission manners may be used (for example, the two collaborative devices in the near field network state transmit data by using the distributed soft bus technology, and the two collaborative devices in the far field network state transmit data via the cloud server).

Based on the foregoing solution, the two collaborative devices in the far field network state may improve data transmission efficiency in the device to cloud manner, and improve user experience of collaboratively processing a work task via the electronic devices.

With reference to the first aspect, in some implementations of the first aspect, when the quantity of second electronic devices is 3, transmitting the to-be-synchronized data to the at least one second electronic device in the first data transmission manner includes: sending the to-be-synchronized data to a third electronic device, a fourth electronic device, and a fifth electronic device via the server, where the third electronic device, the fourth electronic device, and the fifth electronic device belong to the at least one second electronic device.

It should be noted that when the quantity of second electronic devices is 3, a quantity of collaborative devices is 4, and the collaborative devices include the first electronic device, the third electronic device, the fourth electronic device, and the fifth electronic device. In a scenario of collaborative synchronization of four collaborative devices, data may be transmitted in the device to cloud manner regardless of the near field network state or the far field network state. In other words, the first electronic device forwards the to-be-synchronized data to the third electronic device, the fourth electronic device, and the fifth electronic device via the server.

It should be noted that the device to cloud manner is applicable to the near field network state and the far field network state. When the quantity of collaborative devices is greater than or equal to 4, data may be transmitted in the device to cloud manner regardless of the near field network state or the far field network state, to ensure that a quantity of data forwarding times (the quantity of hops) is small in a data transmission process, and reduce a transmission delay and power consumption.

Based on the foregoing solution, four or more collaborative devices may improve data transmission efficiency in the device to cloud manner, and improve user experience of collaboratively processing a work task via the electronic devices.

With reference to the first aspect, in some implementations of the first aspect, the method further includes: when the first electronic device is normally synchronized with the at least one second electronic device, transmitting the to-be-synchronized data to the at least one second electronic device in a second data transmission manner, where a delay of the first data transmission manner is less than a delay of the second data transmission manner.

It should be noted that normal synchronization may be a synchronization manner that has a low data consistency requirement, for example, a projection connection or USB flash drive synchronization.

It may be understood that the first data transmission manner has a higher data consistency requirement than the second data transmission manner. A data consistency requirement may be reflected by using a data synchronization delay. A delay of a transmission manner with a high data consistency requirement is lower than a delay of a transmission manner with a low data consistency requirement.

For example, data consistency of the first data transmission manner is strong eventual consistency, and a data synchronization delay is at a millisecond level. Data consistency of the second data transmission manner is eventual consistency, and a data synchronization delay is at an x-second level.

In other words, when the electronic devices are in the collaborative synchronization scenario, transmitting data in a manner with higher data consistency helps improve user experience in a data synchronization process.

According to a second aspect, an electronic device is provided. The electronic device is a first electronic device, and includes: one or more processors and one or more memories. The one or more memories store one or more computer programs. The one or more computer programs include instructions. When the instructions are executed by the one or more processors, the electronic device is caused to perform the following steps: receiving at least one piece of second synchronization information in response to starting a collaborative application, where the at least one piece of second synchronization information is synchronization information of at least one second electronic device, and the at least one piece of second synchronization information is in one-to-one correspondence with the at least one second electronic device; determining, based on the at least one piece of second synchronization information, whether the first electronic device is collaboratively synchronized with the at least one second electronic device; when the first electronic device is collaboratively synchronized with the at least one second electronic device, determining a first data transmission manner based on a quantity of second electronic devices and/or a network status between the first electronic device and the second electronic device; and transmitting to-be-synchronized data to the at least one second electronic device in the first data transmission manner.

With reference to the second aspect, in some implementations of the second aspect, the synchronization information includes an identifier ID of the electronic device, an ID of the collaborative application, and a data ID, and the data ID indicates data displayed on the electronic device.

With reference to the second aspect, in some implementations of the second aspect, when the instructions are executed by the one or more processors, the electronic device is caused to perform the following steps: before determining the first data transmission manner based on the quantity of second electronic devices and/or the network status between the first electronic device and the second electronic device, determining the quantity of second electronic devices based on the at least one piece of second synchronization information; and determining the network status between the first electronic device and the second electronic device based on the at least one piece of second synchronization information.

With reference to the second aspect, in some implementations of the second aspect, when the instructions are executed by the one or more processors, the electronic device is caused to perform the following step: before determining the quantity of second electronic devices based on the at least one piece of second synchronization information, based on consistency of an ID of a collaborative application in first synchronization information with the ID of the collaborative application in the at least one piece of second synchronization information, and consistency of a data ID in the first synchronization information with the data ID in the at least one piece of second synchronization information, determining that the first electronic device is collaboratively synchronized with the at least one second electronic device, where the first synchronization information is synchronization information of the first electronic device.

With reference to the second aspect, in some implementations of the second aspect, when the quantity of second electronic devices is 1, and the network status between the first electronic device and the second electronic device is the near field network state, transmitting the to-be-synchronized data to the at least one second electronic device in the first data transmission manner includes: when the instructions are executed by the one or more processors, the electronic device is caused to perform the following step of sending the to-be-synchronized data to a third electronic device, where the third electronic device is one of the at least one second electronic device. With reference to the second aspect, in some implementations of the second aspect, when the quantity of second electronic devices is 1, and the network status between the first electronic device and the second electronic device is the far field network state, transmitting the to-be-synchronized data to the at least one second electronic device in the first data transmission manner includes: when the instructions are executed by the one or more processors, the electronic device is caused to perform the following step of sending the to-be-synchronized data to a third electronic device via a server, where the third electronic device is one of the at least one second electronic device.

With reference to the second aspect, in some implementations of the second aspect, when the quantity of second electronic devices is 3, transmitting the to-be-synchronized data to the at least one second electronic device in the first data transmission manner includes: when the instructions are executed by the one or more processors, the electronic device is caused to perform the following step of sending the to-be-synchronized data to a third electronic device, a fourth electronic device, and a fifth electronic device via a server, where the third electronic device, the fourth electronic device, and the fifth electronic device belong to the at least one second electronic device.

With reference to the second aspect, in some implementations of the second aspect, when the instructions are executed by the one or more processors, the electronic device is caused to perform the following step: when the first electronic device is normally synchronized with the at least one second electronic device, transmitting the to-be-synchronized data to the at least one second electronic device in a second data transmission manner, where a delay of the first data transmission manner is less than a delay of the second data transmission manner.

According to a third aspect, a data transmission system is provided. The system includes the first electronic device and the second electronic device according to any one of the first aspect and the possible implementations of the first aspect.

According to a fourth aspect, a data transmission apparatus is provided, including a processor coupled to a memory, where the memory is configured to store a computer program, and the processor is configured to run the computer program, so that the data transmission apparatus performs the method according to any one of the first aspect and the possible implementations of the first aspect.

With reference to the fourth aspect, in some implementations of the fourth aspect, the data transmission apparatus further includes one or both of the memory and a transceiver, and the transceiver is configured to receive a signal and/or send a signal.

According to a fifth aspect, a computer-readable storage medium is provided. The computer-readable storage medium stores a computer program, and when the computer program is executed by a computer, the computer is caused to implement the method according to any one of the first aspect and the possible implementations of the first aspect.

According to a sixth aspect, a computer program product including instructions is provided. When the computer program product runs on a computer, the computer is caused to perform the method according to any one of the first aspect and the possible implementations of the first aspect. According to a seventh aspect, a chip is provided. The chip includes a processor and a data interface, and the processor reads, through the data interface, instructions stored in a memory, to perform the method according to any one of the first aspect and the possible implementations of the first aspect.

With reference to the seventh aspect, in a possible implementation, the processor is coupled to the memory through the interface.

With reference to the seventh aspect, in a possible implementation, the chip system further includes the memory, and the memory stores a computer program or computer instructions.

### BRIEF DESCRIPTION OF DRAWINGS

FIG. 1 is a diagram of a structure of an electronic device;
FIG. 2 is a block diagram of a software structure of an electronic device;
FIG. 3 is a diagram of a scenario according to an embodiment of this application;
FIG. 4(a) to FIG. 4(d) are diagrams of data synchronization manners according to an embodiment of this application;
FIG. 5 is a diagram of a network scenario according to an embodiment of this application;
FIG. 6 is a diagram of a transmission manner according to an embodiment of this application; and
FIG. 7 is a schematic flowchart of a data transmission method according to an embodiment of this application.

### DESCRIPTION OF EMBODIMENTS

The following describes technical solutions of this application with reference to the accompanying drawings.

Terms used in the following embodiments are merely intended to describe specific embodiments, but are not intended to limit this application. As used in the specification and the appended claims of this application, the singular expressions "a/an", "one", "said", "the foregoing", "the", and "this" are intended to also include such expressions as "one or more", unless otherwise clearly indicated in the context. It should also be understood that, in the following embodiments of this application, "at least one" and "one or more" mean one, two, or more than two. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The following describes an electronic device, a user interface used for the electronic device, and embodiments used for using the electronic device. In some embodiments, the electronic device may be a portable electronic device that further includes other functions such as a personal digital assistant function and/or a music player function, for example, a mobile phone, a tablet computer, or a wearable electronic device (for example, a smartwatch) having a wireless communication function. An example embodiment of the portable electronic device includes but is not limited to a portable electronic device using HarmonyOS^{®}, iOS^{®}, Android^{®}, Microsoft^{®}, or another operating system. The portable electronic device may alternatively be another portable electronic device such as a laptop computer (Laptop). It should also be understood that, in some other embodiments, the electronic device may not be a portable electronic device alternatively, but a desktop computer, a smart screen, a smart host, a smart sound box, a smart refrigerator, or another smart home device.

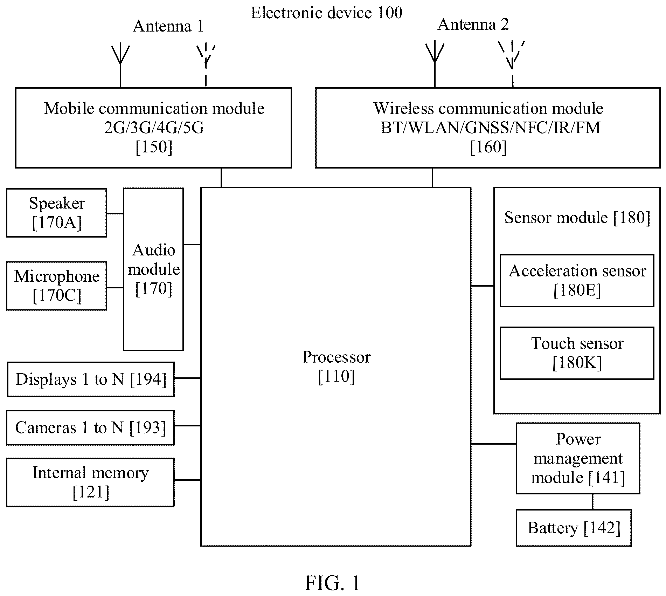

For example, FIG. 1 is a diagram of a structure of an electronic device 100. The electronic device 100 may include a processor 110, an internal memory 121, a power management unit 141, a battery 142, an antenna 1, an antenna 2, a mobile communication module 150, a wireless communication module 160, an audio module 170, a speaker 170A, a microphone 170C, a sensor module 180, a camera 193, and a display 194. The sensor module 180 may include an acceleration sensor 180E, a touch sensor 180K, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a neural center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, thus improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same component with at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transfers the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the microphone 170C, or the like), or displays an image or a video on the display 194. In some embodiments, the modem processor may be an independent component. In some other embodiments, the modem processor may be independent of the processor 110, and is disposed in the same device with the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrated into at least one communication processor module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information. The display 194 is configured to display an image, a video, and the like. The display 194 includes a display panel. In some embodiments, the electronic device 100 may include one or N displays 194, where N is a positive integer greater than 1.

The ISP is configured to process data fed back by the camera 193. In some embodiments, the ISP may be disposed in the camera 193.

The camera 193 is configured to capture a static image or a video. An optical image of an object is generated through the lens, and is projected to the photosensitive element. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more types of video codecs. In this way, the electronic device 100 may play or record videos in a plurality of encoding formats.

The NPU is a neural-network (neural-network, NN) computing processor. The NPU quickly processes input information by drawing on a structure of a biological neural network, for example, by drawing on a transfer mode between human brain neurons, and may further continuously perform self-learning. The NPU may be used to implement applications such as intelligent cognition of the electronic device 100.

The internal memory 121 may be configured to store computer-executable program code, and the executable program code includes instructions. The processor 110 runs the instructions stored in the internal memory 121 to perform various function applications of the electronic device 100 and data processing. The internal memory 121 may include a program storage area and a data storage area. The program storage area may store an operating system, an application required by at least one function (for example, a sound playing function), and the like. The data storage area may store data (for example, audio data) created when the electronic device 100 is used, and the like. In addition, the internal memory 121 may include a high-speed random access memory, or may include a nonvolatile memory, for example, at least one magnetic disk storage device and a flash memory.

The electronic device 100 may implement audio functions, for example, music playing, by using the audio module 170, the speaker 170A, the microphone 170C, the application processor, and the like.

The audio module 170 is configured to convert digital audio information into an analog audio signal output, and is also configured to convert an analog audio input into a digital audio signal. The audio module 170 may be further configured to: encode and decode audio signals. In some embodiments, the audio module 170 may be disposed in the processor 110, or some of functional modules of the audio module 170 are disposed in the processor 110.

The speaker 170A, also referred to as a "loudspeaker", is configured to convert an electrical audio signal into a sound signal. The electronic device 100 may be configured to listen to music or answer a hands-free call by using the speaker 170A.

The microphone 170C, also referred to as a "mike" or a "mic", is configured to convert a sound signal into an electrical signal.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor, to determine a touch event type. A visual output related to the touch operation may be provided through the display 194. In some other embodiments, the touch sensor 180K may alternatively be disposed on a surface of the electronic device 100, and is at a location different from that of the display 194.

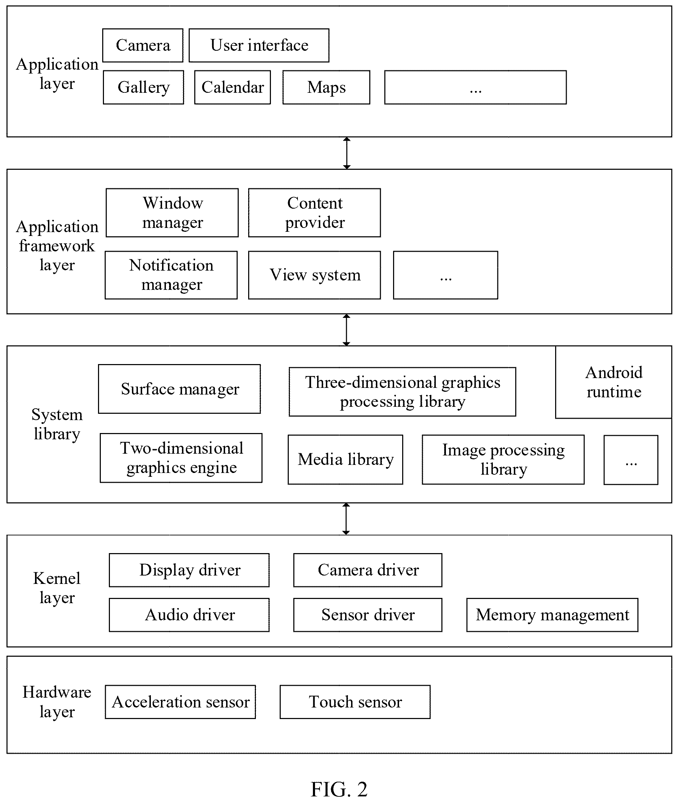

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application layer may include Camera, a user interface (user interface, UI), a third-party application, and the like. The third-party application may include Gallery, Calendar, Maps, and the like.

The application framework layer provides an application programming interface (application programming interface, API) and a programming framework for applications at the application layer. The application framework layer may include some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like. The content provider is configured to: store and obtain data, and enable the data to be accessed by an application. The data may include a video, an image, an audio, calls that are made and answered, a browsing history and bookmarks, an address book, and the like. The view system includes visual controls such as a control for displaying text and a control for displaying an image. The view system may be configured to construct an application. A display interface may include one or more views.

The notification manager enables an application to display notification information in a status bar, and may be configured to transmit a notification-type message. The displayed information may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is prompted in the status bar, an alert tone is made, the electronic device vibrates, or an indicator blinks.

The Android runtime includes a core library and a virtual machine. The Android runtime is responsible for Android system scheduling and management.

The core library includes two parts: One part is a performance function that needs to be invoked by the Java language, and the other part is an Android core library.

The system library may include a plurality of functional modules, for example, a surface manager (surface manager), a media library (media library), a three-dimensional graphics processing library (for example, an OpenGL ES), and a two-dimensional graphics engine (for example, an SGL). The surface manager is configured to manage a display subsystem and provide fusion of two-dimensional and three-dimensional graphics layers for a plurality of applications.

The media library supports playback and recording in a plurality of commonly used audio and video formats, static image files, and the like. The media library may support a plurality of audio and video encoding formats.

The three-dimensional graphics processing library is configured to implement three-dimensional graphics drawing, image rendering, compositing, layer processing, and the like.

The two-dimensional graphics engine is a drawing engine for 2D drawing.

The kernel layer is a layer between hardware and software. The kernel layer includes at least a display driver, a camera driver, an audio driver, and a sensor driver.

The hardware layer may include various sensors, for example, various sensors described in FIG. 1.

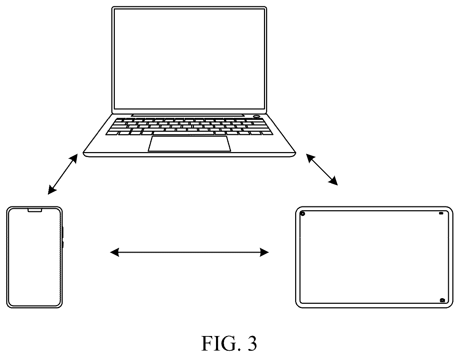

With development of science and technology, a user usually has a plurality of electronic devices. For example, FIG. 3 is a diagram of an application scenario of a data transmission method according to an embodiment of this application. The plurality of electronic devices may include a mobile phone terminal, a personal computer, a tablet computer, and the like. To help work and learning of the user, the plurality of electronic devices may be interconnected, to implement data synchronization, so that the user can flexibly use different electronic devices to process data. However, there are a plurality of data synchronization manners, and different synchronization manners have different data consistency requirements. Therefore, embodiments of this application provide a data transmission manner, to provide appropriate data consistency for different synchronization manners, and determine an appropriate data transmission manner based on a quantity of electronic devices and a network status, thereby improving user experience in a data synchronization process.

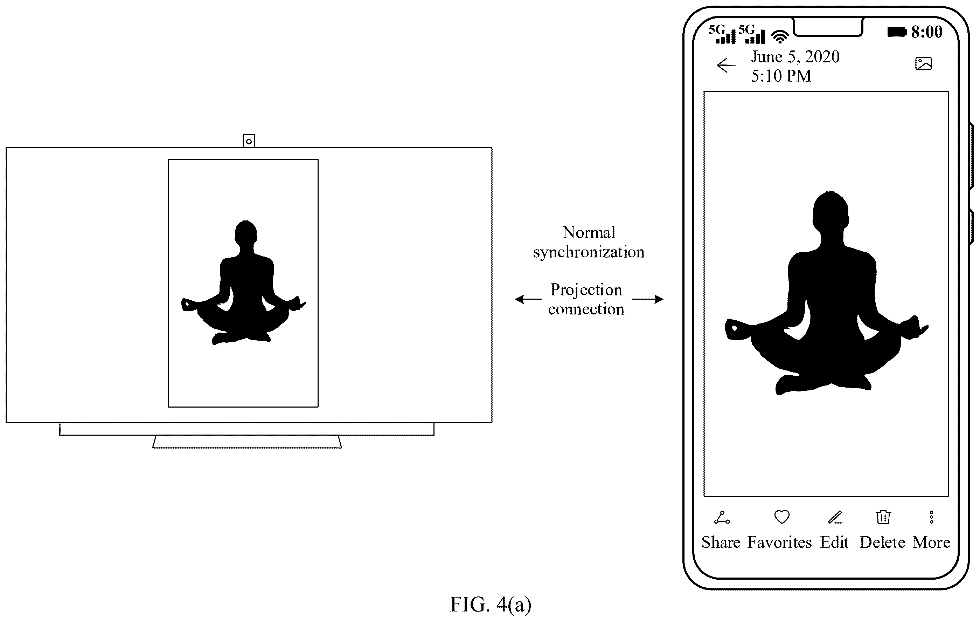

For example, the following describes several common data synchronization manners with reference to FIG. 4(a) to FIG. 4(d). A data synchronization manner is a normal synchronization manner. Generally, the normal synchronization manner has a low data consistency requirement. Another data synchronization manner is a collaborative synchronization manner. Generally, the collaborative synchronization manner has a high data consistency requirement. In data transmission scenarios provided in embodiments of this application, data consistency may indicate that data keeps same content and status on a plurality of interconnected electronic devices. The low data consistency requirement (eventual consistency) may be understood as that a data synchronization delay is at an x-second level. The high data consistency requirement (strong eventual consistency) may be understood as that a data synchronization delay is at a hundred-millisecond level.

FIG. 4(a) shows a normal synchronization manner in which a mobile phone terminal is connected to a smart screen through projection. Specifically, if both the mobile phone terminal and the smart screen support a high definition multimedia interface (high definition multimedia interface, HDMI), the mobile phone terminal may be connected to the smart screen through projection by using the HDMI. Alternatively, if both the mobile phone terminal and the smart screen support a wireless projection function, the mobile phone terminal may be connected to the smart screen through projection in a wireless projection connection manner. For example, the mobile phone terminal and the smart screen are connected to a same local area network, and screen mirroring is implemented by using a system-level distributed soft bus technology, so that a picture displayed on the mobile phone terminal shown in FIG. 4(a) can be mirrored and displayed on the smart screen in real time. For another example, the mobile phone terminal forwards projected content via a cloud server by using an application (for example, a video playing program or a conference application) that can support a projection function, the mobile phone terminal sends a projected picture to the smart screen, and the smart screen may display the picture.

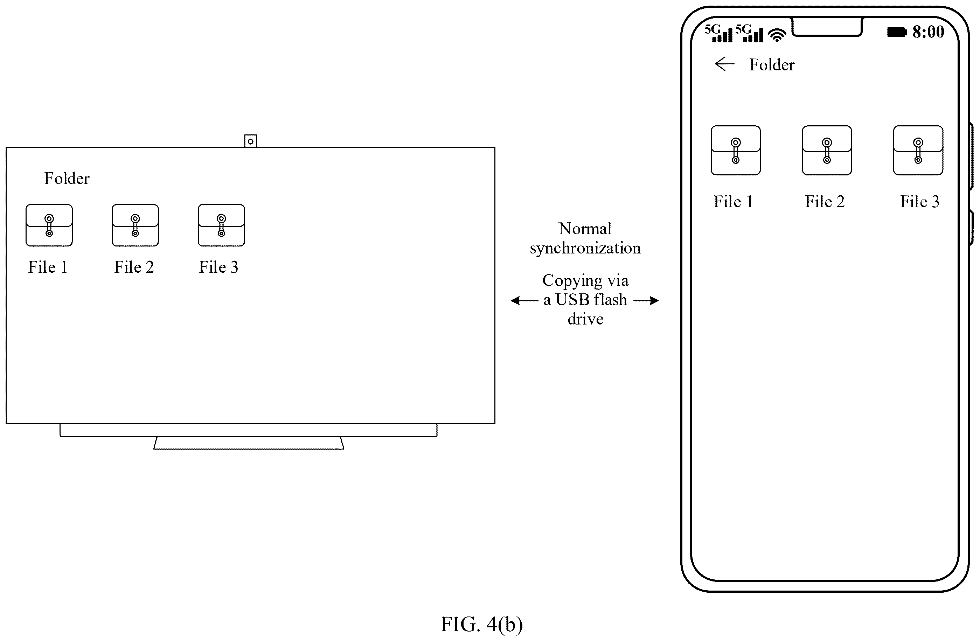

FIG. 4(b) shows another normal synchronization manner in which data may be synchronized between a mobile phone terminal and a smart screen by using a USB flash drive. This manner needs to rely on a manual operation of a user. For example, the user plugs the USB flash drive or another mobile storage device into the mobile phone terminal, copies files (for example, a file 1, a file 2, and a file 3) in a folder that needs to be synchronized to the mobile storage device, removes the mobile storage device from the mobile phone terminal, plugs the mobile storage device into a smart screen device, and moves the files from the mobile storage device to the smart screen, to complete data synchronization.

It should be noted that FIG. 4(a) and FIG. 4(b) describe examples of two normal synchronization manners. In the two manners, data may be displayed on another electronic device from one electronic device, and the user may process the synchronized data on one or more of the electronic devices. For example, when the projection connection shown in FIG. 4(a) is used, the smart screen may synchronously display the picture shared by the mobile phone terminal. When the user zooms in or zooms out the picture on the mobile phone terminal, the picture displayed on the smart screen is also zoomed in or zoomed out synchronously. When the data is synchronized in the USB flash drive-based copying manner shown in FIG. 4(b), the smart screen displays the shared file from the mobile phone terminal. Because the file exists on both the mobile phone terminal and the smart screen, the user may separately process the shared file on the mobile phone terminal or the electronic device. After processing the file 1 by using the mobile phone terminal, the user may synchronize the processed file 1 to the smart screen by using the mobile storage device, so that the smart screen obtains the processed file 1. Alternatively, after processing the file 2 by using the smart screen, the user may synchronize the processed file 2 to the mobile phone terminal by using the mobile storage device, so that the mobile phone terminal obtains the processed file 2. It can be learned that real-time data synchronization cannot be implemented by using the mobile storage device. In the foregoing two data synchronization scenarios, high data consistency is not needed. FIG. 4(c)-1 and FIG. 4(c)-2 show a collaborative synchronization manner in which a mobile phone terminal is collaboratively connected to a smart screen, and a home screen of the mobile phone terminal is displayed on the smart screen. A user may control an interface of the mobile phone terminal on the smart screen. For example, content may be freely dragged between the mobile phone terminal and the smart screen, to implement dual-screen operations.

It should be noted that collaborative synchronization is a distributed technology, and can be used to implement cross-system and cross-device collaboration. After a plurality of electronic devices are collaboratively connected, data synchronization and resource sharing can be implemented. In addition, the plurality of electronic devices may further complete tasks of two electronic devices on one of the electronic devices by using one peripheral device.

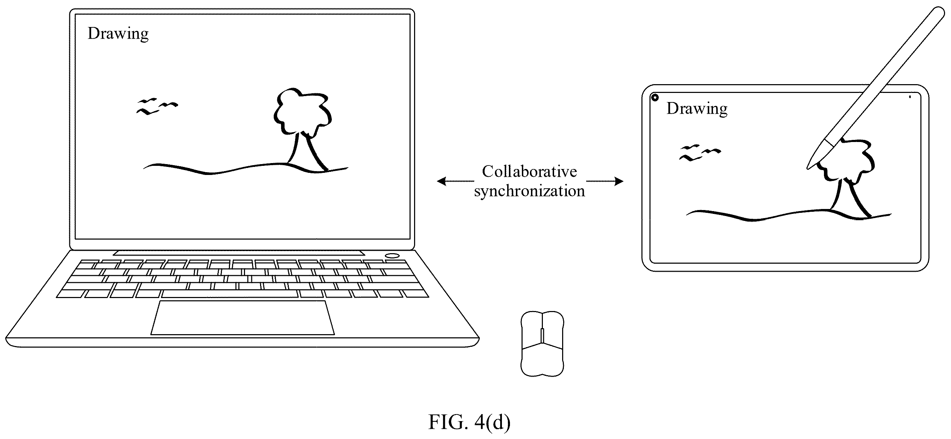

For example, FIG. 4(d) shows a collaborative synchronization manner in which a tablet computer is collaboratively connected to a personal computer. A drawing application is started at front ends of both the personal computer and the tablet computer, and same picture content is displayed. After the tablet computer is collaboratively connected to the personal computer, the tablet computer may be used as an extended screen of the personal computer, to extend operation space and an operation manner of the personal computer. The tablet computer and the personal computer may share a mouse and a keyboard of the personal computer, and the tablet computer may control synchronized data by using a touchscreen (a finger or a stylus). The mouse of the personal computer may implement dragging of data between the personal computer and the tablet computer, to make data transmission more convenient.

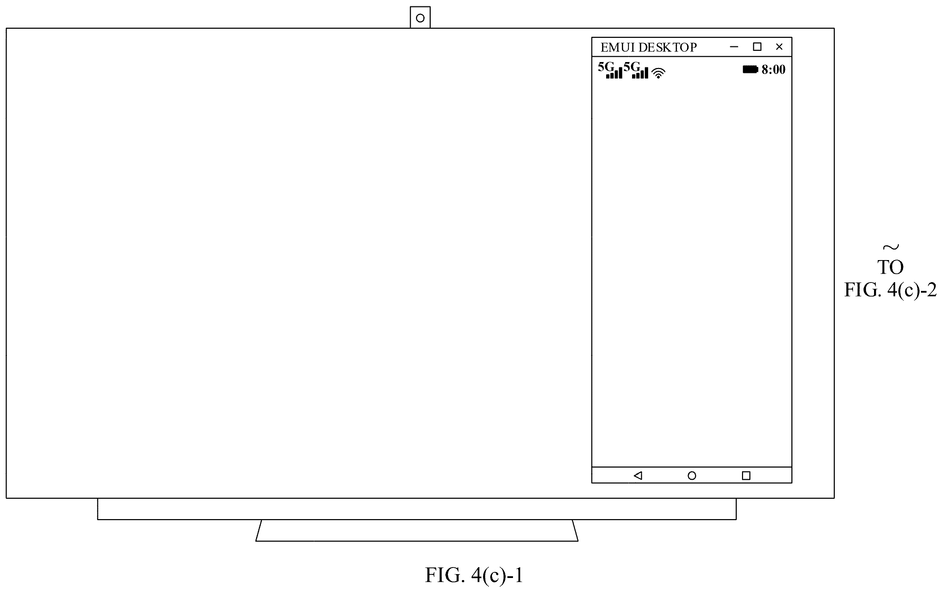

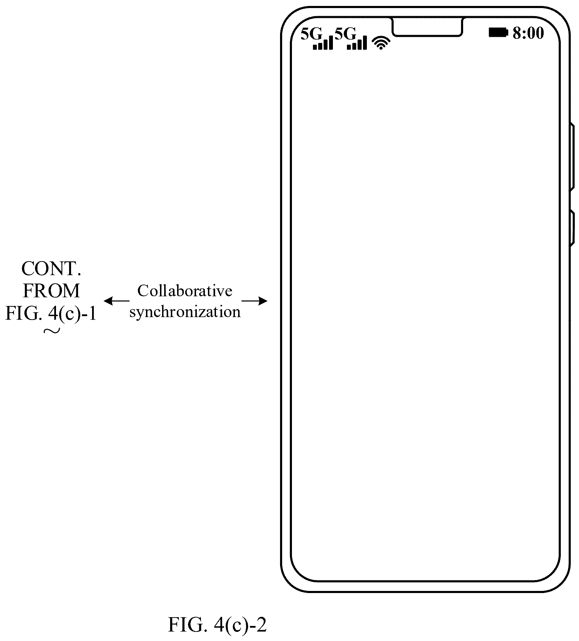

It should be noted that, in the collaborative synchronization manners shown in FIG. 4(c)-1 to FIG. 4(d), an electronic device may synchronize data to a collaboratively connected device in real time. It can be learned that in a collaborative synchronization scenario, a plurality of electronic devices need to start a same application at front ends and process synchronized data in real time. This requires high data consistency to meet user experience in the collaborative synchronization scenario.

In other words, in the normal synchronization scenario, to reduce power consumption, there is no need to synchronize data by using high data consistency. However, in the collaborative synchronization scenario, to improve user experience, data needs to be synchronized by using high data consistency. Therefore, in the data transmission method provided in embodiments of this application, data synchronization processing may be performed by using corresponding data consistency based on a specific data synchronization scenario.

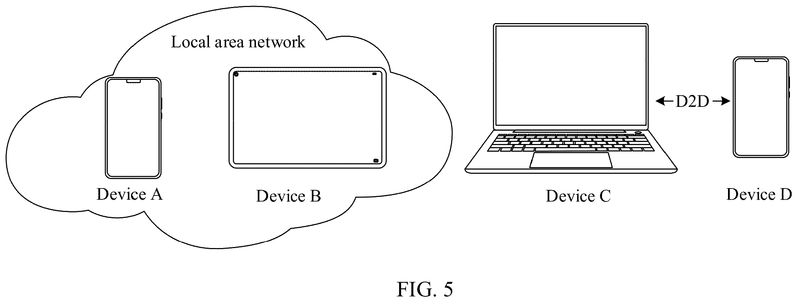

It should be noted that, determining whether a current synchronization scenario is the collaborative synchronization scenario shown in FIG. 4(c)-1 and FIG. 4(c)-2 or FIG. 4(d) needs to rely on synchronization information. The synchronization information includes information such as a device identifier (identifier, ID), an application ID, and a data ID. The data ID may indicate information such as a page, a picture, or text that is currently displayed (or opened) on the device. Each device in a collaboration scenario may determine, based on the synchronization information, that the current synchronization scenario is the collaboration scenario. Further, after it is determined that the current synchronization scenario is the collaborative synchronization scenario, a quantity of current collaborative devices and/or a network status need/needs to be determined. The collaborative synchronization scenario requires at least two electronic devices to collaborate. The network status includes near field communication and/or far field communication. The foregoing specific manners of determining the collaborative synchronization scenario, the quantity of collaborative devices, and the network status are described in detail below with reference to FIG. 5.

FIG. 5 is a diagram of a network scenario. In the network scenario, a device A and a device B are in a same local area, and may determine a collaboration scenario and a quantity of collaborative devices, and identify a network status between the collaborative devices through a local area network.

It should be noted that the local area network is an area network formed in a local area. The local area network can cover a limited area, but has a higher transmission speed, stable performance, and a simple framework compared with another network. The local area network includes a wired local area network and a wireless local area network (WLAN). There are a plurality of implementation protocols for the wireless local area network. Currently, Wi-Fi is most widely used, and a plurality of devices having a wireless function may be connected to form a wireless local area network by using one router. For example, in a home scenario, a small wireless local area network may be established usually by using one router. The wired local area network may use various different transmission technologies. Generally, devices in the wired local area network may communicate and interact with each other by using copper wires, optical fibers, and the like as transmission media.

For example, as shown in FIG. 5, the device A and the device B are in a same local area network. The device A and the device B may report respective synchronization information to a server in the local area network. For example, the device A reports an ID of the device A, an ID of an application (for example, the drawing application shown in FIG. 4(d)) started at a front end of the device A, and a data ID (for example, a specific picture shown in FIG. 4(d)). Similarly, the device B also reports a device ID, an application ID, and a data ID of the device B to the server in the local area network.

The device A and the device B may alternatively download synchronization information of another device from the server in the local area network. For example, the device A downloads the device ID, the application ID, and the data ID of the device B from the server in the local area network, and the device B downloads the device ID, the application ID, and the data ID of the device A from the server in the local area network. When the application ID of the device B is consistent with the application ID of the device A, it may indicate that the same application is started or displayed at front ends of the device A and the device B. When the data ID of the device B is consistent with the data ID of the device A, it may indicate that same data (for example, a page, a picture, or text) is started or displayed at the front ends of the device B and the device A. In other words, when the device A and the device B are connected to the same local area network in a wired or wireless manner, the device A and the device B may exchange the synchronization information with each other via the server in the local area network. This manner of exchanging the synchronization information via the server may also be understood as a device to cloud manner.

The device A may determine, based on the synchronization information, whether the device A is collaboratively synchronized with the device B, a quantity of devices that are collaboratively synchronized with the device A, and a network status. For example, the device A learns, based on the downloaded synchronization information of the device B, that the same application is started or displayed at the front ends of the device B and the device A, and that same data is started or displayed at the front ends of the device B and the device A. Further, the device A determines that the device A is collaboratively synchronized with the device B. The device A learns, from the server in the local area network, that only the device B is collaboratively synchronized with the device A, and then may determine that the quantity of collaborative synchronization devices is 2 (including the device A and the device B) and determine the device ID of the device B that is collaboratively synchronized with the device A. In addition, because both the device A and the device B are connected to the server in the same local area network, the server in the local area network stores the device IDs of the device A and the device B, and the server in the local area network may determine that the device A and the device B are in a near field network state. Similarly, the device B may also determine, based on the synchronization information, whether the device B is collaboratively synchronized with the device A, a quantity of devices that are collaboratively synchronized with the device B, and a network status.

In addition, as shown in FIG. 5, in addition to the device A and the device B in the same local area network, a device C and a device D outside the local area network are also included. The device C may communicate and interact with the device A and the device B in the local area network via a cloud server. The device C may report synchronization information of the device C to the cloud server, and the device A and the device B may also report the respective synchronization information to the cloud server. Each device downloads synchronization information of another device from the cloud server, and determines, based on the synchronization information, whether a scenario is a collaborative synchronization scenario, a quantity of collaborative synchronization devices, and a network status. For example, the device C downloads the synchronization information of the device A and the device B from the cloud server, and determines that a same application and data are started or displayed at front ends of the device C, the device A, the device B. Therefore, it is determined that a current synchronization scenario is the collaborative synchronization scenario, and the quantity of collaborative devices is 3 (including the device A, the device B, and the device C). Because the device C exchanges the synchronization information with the device A and the device C via the cloud server, the device C and the device A or the device B are in a far field network state. However, for the device A, the device B, and the device C, the device A and the device B are in the near field network state. It can be learned that network statuses of the device A, the device B, and the device C include the near field network state and the far field network state. This manner of exchanging the synchronization information via the cloud server may also be understood as a device to cloud manner. For another example, the device D and the device C may exchange respective synchronization information in a device to device (device to device, D2D) communication manner, and the device D may also determine a synchronization scenario, a quantity of collaborative devices, a network status, and the like based on the synchronization information. This manner of directly exchanging synchronization information between devices may be understood as a device to device manner.

It should be noted that each of the foregoing devices may send the synchronization information of the device to the server or send the synchronization information to another device. It may be understood that when the device starts a collaborative application (for example, the drawing application), the device may be triggered to send the synchronization information of the device.

Alternatively, to reduce power consumption, the device may send updated synchronization information when data changes. For example, a picture of the drawing application is displayed on the device. When the user modifies the picture on the device, the device may upload a modified data ID to the cloud server. The modified data ID may indicate a modified picture.

It should be noted that there are at least two collaborative devices in the collaborative synchronization scenario. A quantity of collaborative devices and a network status (including a near field network state, a far field network state, or a near field network state and a far field network state) of the collaborative devices are determined by querying device IDs in a near field network (for example, the local area network). For example, as shown in FIG. 5, the device A and the device B are in the same local area network, so that the device A and the device B are in the near field network state relative to each other; and the device C is not in the local area network, so that the device C is in the far field network state relative to the device A or the device B. A near field and a far field may be relative concepts in terms of a communication distance. Simply speaking, if a distance between two devices is short, the two devices may be in the near field network state. If a distance between two devices is long, the two devices may be in the far field network state.

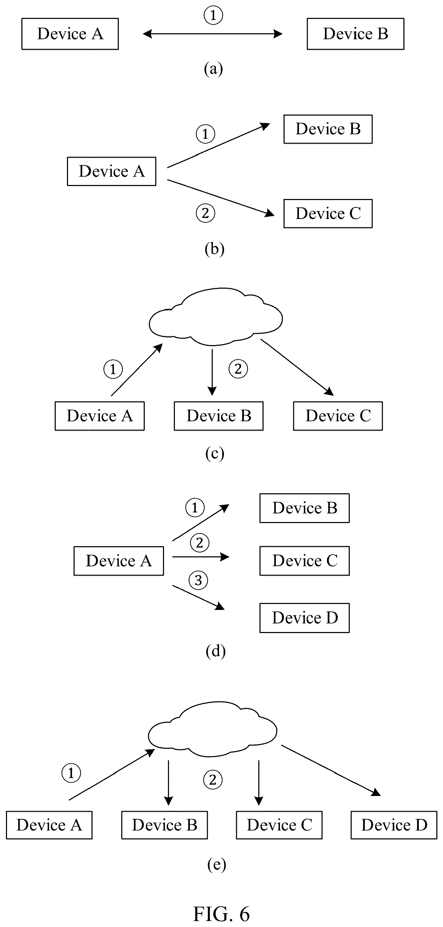

Further, in the collaborative synchronization scenario, a preferred data transmission manner may be determined based on the quantity of collaborative devices and the network status. The following describes a manner of determining a preferred transmission strategy with reference to FIG. 6. (a) in FIG. 6 shows a data transmission manner of two collaborative devices. When a device A and a device B are in a near field network state, data may be transmitted in a device to device manner. In other words, the device A and the device B directly communicate and interact with each other, and the device A may directly transmit data to the device B. In a scenario in which there are two collaborative devices and the two collaborative devices are in the near field network state, a quantity of hops for the device A to complete data synchronization is 1. Simply speaking, a process in which the device A transmits data to the device B to complete data synchronization needs one hop.

For example, the device to device manner may specifically use a distributed soft bus. The distributed soft bus may provide a unified distributed communication capability for seamless interconnection between devices, and can quickly discover and connect to each other, to efficiently transmit a task and data. In HarmonyOS, different devices are connected by using a distributed soft bus technology, to implement efficient and convenient communication between a plurality of devices in a plurality of communication manners. In this way, a user is like using "one device". A logical architecture of the distributed soft bus may include four parts: discovery, connection, networking, and transmission. The four parts may cooperate with each other in service logic, and achieve a communication objective of the distributed soft bus by constructing a distributed communication framework. The following describes the four parts of the distributed soft bus.

### 1. Discovery

With a discovery technology of the distributed soft bus, any device can discover surrounding distributed devices. Any device can be a discoverer, a discoveree, or both a discoverer and a discoveree.

Specifically, the discovery technology of the distributed soft bus supports discovery of devices through different media such as Bluetooth, Ethernet, and Wi-Fi, supports selection of an appropriate discovery medium based on capabilities of different devices, and supports provision of appropriate discovery policies such as a discovery frequency and a scan period based on features and service requirements of devices.

### 2: Connection

With a connection technology of the distributed soft bus, any device can connect to other surrounding distributed devices. The distributed soft bus selects an appropriate communication medium and a most appropriate communication connection technology based on capabilities and service requirements of distributed devices. A communication link is established between the devices, to facilitate subsequent networking and transmission.

### 3. Networking

With a distributed networking technology, any device can form a network by using distributed devices with different communication capabilities. Networking makes a distributed network of devices not limited to a single or one-to-one communication connection relationship. Distributed networking can be used to form a dynamic network with devices involved in a current scenario (like a home scenario or an industrial manufacturing scenario).

In the dynamic network obtained through networking, a communication capability and a service capability of each device can be effectively managed. When any device in the network has a service requirement, any communication device may provide, through the network of the distributed soft bus, information about a service-required device at any time, to support establishment of a service channel.

### 4. Transmission

A transmission technology of the distributed soft bus may provide a service data transmission capability for any device in a current scenario. The transmission technology of the distributed soft bus may abstract service data and quality of service (quality of service, QoS), and provide an appropriate transmission service based on network load and a capability of a device. The transmission technology can ensure a transmission quality of a plurality of services in an entire distributed network in addition to a communication requirement of a single service.

It may be understood that two collaborative devices shown in (a) in FIG. 6 are in a near field network state, and data transmission may be preferably performed by using the distributed soft bus. If transmission is performed via a cloud server, a quantity of hops for the device A to complete data synchronization is 2. Simply speaking, the device A needs to first send data to the cloud server, and then the cloud server sends the data to the device B, to complete data transmission. It can be learned that, when the two collaborative devices are in the near field network state, a quantity of hops for transmitting data through the distributed soft bus is clearly less. A smaller quantity of hops indicates fewer resources for transmitting data and a lower delay. Therefore, in some scenarios, a data transmission manner with a smaller quantity of hops is preferred.

When the device A and the device B are in a far field network state, the distributed soft bus technology may not meet a current data transmission requirement. Therefore, data needs to be transmitted via the cloud server. To be specific, the device A sends data to the cloud server, and the cloud server forwards the data to the device B. In this scenario, the quantity of hops for the device A to complete data synchronization is 2. It can be learned that even if the quantities of collaborative devices are the same, different data transmission manners may be used (for example, the two collaborative devices in the near field network state transmit data by using the distributed soft bus technology, and the two collaborative devices in the far field network state transmit data via the cloud server).

(b) in FIG. 6 shows a data transmission manner of three collaborative devices. When a device A, a device B, and a device C are in a near field network state, data may be transmitted in a device to device manner. In other words, the device A, the device B, and the device C may directly communicate and interact with each other, and the device A may directly transmit data to the device B, or may directly transmit data to the device C. In a scenario in which there are three collaborative devices and the three collaborative devices are in the near field network state, a quantity of hops for the device A to synchronize data to the other two collaborative devices is 2. Simply speaking, a process in which the device A transmits data to the device B is one hop, and a process in which the device A transmits data to the device C is one hop, so that a process in which the device A completes data synchronization needs two hops in total.

(c) in FIG. 6 shows a data transmission manner of three collaborative devices. Different from the scenario shown in (b) in FIG. 6, the three collaborative devices shown in (c) in FIG. 6 are in a far field network state. Therefore, the device to device manner (for example, the distributed soft bus) is not applicable to a scenario in which the three collaborative devices are in the far field network state. Therefore, a data transmission process may be completed by using a forwarding function of a cloud server. For example, a device A sends data to the cloud server, and the cloud server may deliver the data to a device B and a device C. It can be learned that the foregoing process of uploading data to the cloud server needs one hop, and a process in which the cloud server delivers the data to a collaborative device needs one hop, so that a process in which the device A completes data synchronization needs two hops in total.

(d) in FIG. 6 shows a data transmission manner of four collaborative devices. When a device A, a device B, a device C, and a device D are in a near field network, data may be transmitted in a device to device manner. In other words, the device A, the device B, the device C, and the device D may directly communicate and interact with each other, and the device A may separately transmit data to the device B, the device C, and the device D. When the four collaborative devices transmit data in the device to device manner, a quantity of hops for the device A to synchronize data to the other three collaborative devices is 3. Simply speaking, a process in which the device A transmits data to the device B is one hop, a process in which the device A transmits data to the device C is one hop, and a process in which the device A transmits data to the device D is one hop, so that a process in which the device A completes data synchronization needs three hops in total.

(e) in FIG. 6 shows a data transmission manner of four collaborative devices. Different from the data transmission manner described in (d) in FIG. 6, a device to cloud data transmission manner is shown in (e) in FIG. 6. That is, data synchronization is implemented through forwarding via a cloud server. When the four collaborative devices transmit data in the device to cloud manner, a quantity of hops for a device A to synchronize data to the other three collaborative devices is 2. Simply speaking, a process in which the device A sends data to the cloud server is one hop, and a process in which the cloud server delivers the data to collaborative devices (a device B, a device C, and a device D) needs one hop, so that a process in which the device A completes data synchronization needs 2 hops in total.

It should be noted that when data is transmitted in the device to device manner, a larger quantity of collaborative devices indicates a larger quantity of hops for completing data transmission, namely, a larger quantity of data forwarding times. Therefore, for the near field network state, it cannot be simply considered that data is transmitted in the device to device manner, and a quantity of collaborative devices further needs to be considered. For example, as described in (e) in FIG. 6, for the four collaborative devices in the near field network state, the quantity of hops (two hops) for transmitting data in the device-to-cloud manner is clearly less than the quantity of hops (three hops) for transmitting data in the device to device manner. In other words, when a preferred data transmission manner (data transmission strategy) is determined, a quantity of data forwarding times (a quantity of hops) in a data transmission process needs to be determined based on a quantity of collaborative devices and a network status, and a data transmission manner with a small quantity of data forwarding times is selected as the preferred manner. This can reduce a delay in the data transmission process and reduce power consumption.

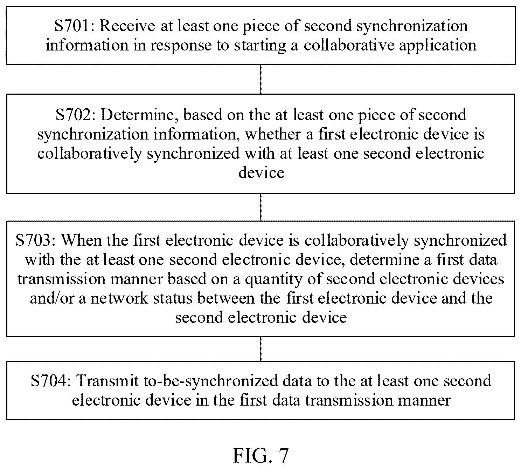

It should be noted that, in the collaborative synchronization scenario, the quantity of collaborative devices and the network status may dynamically change. Therefore, the data transmission manner may also change with the quantity of collaborative devices and/or the network status, so that the data transmission manner can be most suitable for a current collaborative synchronization scenario. FIG. 7 shows a data transmission method according to an embodiment of this application. The method is applicable to the scenario shown in FIG. 3. The following describes the method in detail. S701: Receive at least one piece of second synchronization information in response to starting a collaborative application.

It should be noted that the at least one piece of second synchronization information is synchronization information of at least one second electronic device, the second electronic device is an electronic device other than a first electronic device, and the at least one piece of second synchronization information is in one-to-one correspondence with the at least one second electronic device. The synchronization information includes an ID of an electronic device, an ID of the collaborative application, and a data ID. The data ID indicates data displayed on the electronic device.

For example, the collaborative application may be an application that supports a collaborative synchronization function, for example, a drawing application or a file application. The data ID may indicate information such as a page, a picture, or text that is currently displayed (or opened) on the electronic device.

It should be noted that the first electronic device may send first synchronization information to the at least one second electronic device or send first synchronization information to a cloud server in response to an operation of starting the collaborative application by a user. In addition, the first electronic device may receive the at least one piece of second synchronization information from the at least one second electronic device, or may receive the at least one piece of second synchronization information from the cloud server. The first synchronization information is synchronization information of the first electronic device.

It may be understood that whether a device that exchanges the first synchronization information and the second synchronization information with the first electronic device is the cloud server or another electronic device may depend on a current network status.

For example, when the first electronic device and the second electronic device respectively correspond to the device A and the device B shown in FIG. 5 and are in a same local area network, and when the user starts the collaborative application on the first electronic device, the first electronic device reports the first synchronization information to a local area network server, and the second electronic device reports the second synchronization information to the local area network server; and the first electronic device downloads the second synchronization information from the local area network server, and the second electronic device downloads the first synchronization information from the local area network server. For another example, when the first electronic device and the second electronic device respectively correspond to the device A and the device C shown in FIG. 5 and are not in a same local area network, the device C communicates and interacts with the device A via the cloud server. When the user starts the collaborative application on the first electronic device, the first electronic device reports the first synchronization information to the cloud server, and the second electronic device reports the second synchronization information to the cloud server; and the first electronic device downloads the second synchronization information from the cloud server, and the second electronic device downloads the first synchronization information from the cloud server. For another example, when the first electronic device and the second electronic device respectively correspond to the device C and the device D shown in FIG. 5, the first electronic device and the second electronic device communicate and interact with each other in a device to device manner. When the user starts the collaborative application on the first electronic device, the first electronic device and the second electronic device exchange synchronization information with each other.

It should be noted that when the collaborative application is started, upload and download of synchronization information may be triggered. Alternatively, to reduce power consumption, updated synchronization information may be transmitted when data changes. For example, a picture of the drawing application is displayed on the first electronic device. When the user zooms out the picture on the first electronic device, the first electronic device may upload a modified data ID to the cloud server. The modified data ID may indicate a zoomed-out picture.

S702: Determine, based on the at least one piece of second synchronization information, whether the first electronic device is collaboratively synchronized with the at least one second electronic device.

For example, the first electronic device may be collaboratively or normally synchronized with the at least one second electronic device.

S703: When the first electronic device is collaboratively synchronized with the at least one second electronic device, determine a first data transmission manner based on a quantity of second electronic devices and/or a network status between the first electronic device and the second electronic device.

It should be noted that before determining the first data transmission manner based on the quantity of second electronic devices and/or the network status between the first electronic device and the second electronic device, the first electronic device may determine the quantity of second electronic devices based on the at least one piece of second synchronization information, and determine the network status between the first electronic device and the second electronic device based on the at least one piece of second synchronization information.

It should be noted that when the first electronic device receives one piece of second synchronization information, the first electronic device may determine that the quantity of second electronic devices is 1; or when the first electronic device receives two pieces of second synchronization information, the first electronic device may determine that the quantity of second electronic devices is 2. In other words, the first electronic device may determine the quantity of second electronic devices based on a quantity of received pieces of second synchronization information. In addition, because the synchronization information includes the ID of the electronic device, the first electronic device may further determine, based on the ID of the electronic device in the second synchronization information, an ID of the second electronic device corresponding to the second synchronization information.

It should be noted that the network status includes near field communication, far field communication, or near field communication and far field communication. Simply speaking, a near field and a far field may be relative concepts in terms of a communication distance. If a distance between two electronic devices is short, the two electronic devices may be in a near field network state. If a distance between two electronic devices is long, the two electronic devices may be in a far field network state. When the first electronic device is collaboratively synchronized with at least two second electronic devices, both the near field network state and the far field network state may exist. For example, as shown in FIG. 5, the first electronic device corresponds to the device C, one second electronic device corresponds to the device D, and another second electronic device corresponds to the device A. It can be learned that the device C and the device D are in a near field network state, and the device A and the device C or the device D are in a far field network state. Network statuses of the device A, the device C, and the device D include the near field network state and the far field network state.

Optionally, before determining the quantity of second electronic devices based on the at least one piece of second synchronization information, the first electronic device determines, based on consistency of an ID of a collaborative application in first synchronization information with the ID of the collaborative application in the at least one piece of second synchronization information, and consistency of a data ID in the first synchronization information with the data ID in the at least one piece of second synchronization information, that the first electronic device is collaboratively synchronized with the at least one second electronic device.

In other words, when a same collaborative application and same data are displayed at front ends of the first electronic device and the second electronic device, it may be considered that the first electronic device and the second electronic device are in a collaborative synchronization scenario. In the collaborative synchronization scenario, the first electronic device and the second electronic device synchronize data and share resources. In addition, for a plurality of collaboratively synchronized electronic devices, tasks of two electronic devices may be completed on one electronic device via one peripheral device (for example, a mouse or a keyboard).

It may be understood that the first electronic device is collaboratively synchronized with the second electronic device, and content displayed on the first electronic device is consistent with content displayed on the second electronic device. When content displayed on one electronic device changes, content displayed on the other electronic device also changes accordingly. S704: Transmit to-be-synchronized data to the at least one second electronic device in the first data transmission manner.

It should be noted that a data transmission manner needs to be determined before the to-be-synchronized data is transmitted between the first electronic device and the second electronic device. A basis for determining the data transmission manner includes at least one of the following: the quantity of second electronic devices and the network status. The data transmission manner may be understood as a data transmission strategy, and may include a device to device manner and a device to cloud manner.

For example, when the quantity of second electronic devices is 1, and the network status between the first electronic device and the second electronic device is the near field network state, the to-be-synchronized data is sent to a third electronic device. The third electronic device is one of the at least one second electronic device.

It should be noted that when the quantity of second electronic devices is 1, a quantity of collaborative devices is 2, and the collaborative devices include the first electronic device and the third electronic device. In addition, when the first electronic device and the third electronic device are in the near field network state, data can be directly transmitted in a device to device manner. In other words, the first electronic device directly sends the to-be-synchronized data to the third electronic device.

For example, as shown in (a) in FIG. 6, the first electronic device corresponds to the device A, the third electronic device corresponds to the device B, and the device A directly communicates and interacts with the device B. In other words, in a scenario in which there are two collaborative devices and the two collaborative devices are in the near field network state, a quantity of hops for the device A to complete data synchronization is 1. Certainly, for the device B, a quantity of hops for the device B to complete data synchronization is also 1.

For example, the two collaborative devices in the near field network state may preferably transmit data through a distributed soft bus.

In contrast, if the two collaborative devices in the near field network state transmit data in a server forwarding manner, a quantity of hops for the first electronic device to complete data synchronization is 2. To be specific, the first electronic device needs to first send the to-be-synchronized data to the server, and then the server forwards the to-be-synchronized data to the third electronic device. It can be learned that, when the two collaborative devices are in the near field network state, a quantity of hops for transmitting data through the distributed soft bus is clearly less. A smaller quantity of hops indicates fewer resources for transmitting data and a lower delay. Therefore, in some scenarios, a data transmission manner with a smaller quantity of hops is preferred.

For example, when the quantity of second electronic devices is 1, and the network status between the first electronic device and the second electronic device is the far field network state, the to-be-synchronized data is sent to a third electronic device via the server, where the third electronic device is one of the at least one second electronic device.

It should be noted that when the quantity of second electronic devices is 1, a quantity of collaborative devices is 2, and the collaborative devices include the first electronic device and the third electronic device. In addition, when the first electronic device and the third electronic device are in the far field network state, data cannot be transmitted in a device to device manner, and data may be transmitted in a device to cloud manner. In other words, the first electronic device forwards the to-be-synchronized data to the third electronic device via the server. When the two collaborative devices are in the far field network state, a quantity of hops for the first electronic device to complete data synchronization is 2. It can be learned that even if the quantities of collaborative devices are the same, different data transmission manners may be used (for example, the two collaborative devices in the near field network state transmit data by using the distributed soft bus technology, and the two collaborative devices in the far field network state transmit data via the cloud server).

For example, when the quantity of second electronic devices is 2, and the network status between the first electronic device and the second electronic device is the near field network state, the to-be-synchronized data is sent to a third electronic device and a fourth electronic device, where the third electronic device and the fourth electronic device belong to the at least one second electronic device.

It should be noted that when the quantity of second electronic devices is 2, a quantity of collaborative devices is 3, and the collaborative devices include the first electronic device, the third electronic device, and the fourth electronic device. In addition, when the first electronic device, the third electronic device, and the fourth electronic device are in the near field network state, data may be directly transmitted in a device to device manner. In other words, the first electronic device directly sends the to-be-synchronized data to the third electronic device and the fourth electronic device.

For example, as shown in (b) in FIG. 6, the first electronic device corresponds to the device A, the third electronic device corresponds to the device B, and the fourth electronic device corresponds to the device C. The device A, the device B, and the device C directly communicate and interact with each other. In other words, in a scenario in which there are three collaborative devices and the three collaborative devices are in the near field network state, a quantity of hops for the device A to complete data synchronization is 2. Certainly, for the device B and the device C, a quantity of hops for completing data synchronization is also 2.

For example, when the quantity of second electronic devices is 2, and the network status between the first electronic device and the second electronic device is the far field network state, the to-be-synchronized data is sent to a third electronic device and a fourth electronic device via the cloud server, where the third electronic device and the fourth electronic device belong to the at least one second electronic device.

It should be noted that when the quantity of second electronic devices is 2, a quantity of collaborative devices is 3, and the collaborative devices include the first electronic device, the third electronic device, and the fourth electronic device. In addition, when the first electronic device, the third electronic device, and the fourth electronic device are in the far field network state, data may be transmitted in a device to cloud manner. In other words, the first electronic device forwards the to-be-synchronized data to the third electronic device and the fourth electronic device via the server.

For example, as shown in (c) in FIG. 6, the first electronic device corresponds to the device A, the third electronic device corresponds to the device B, and the fourth electronic device corresponds to the device C. The device A, the device B, and the device C communicate and interact with each other via the server. In other words, in a scenario in which there are three collaborative devices and the three collaborative devices are in the far field network state, a quantity of hops for the device A to complete data synchronization is 2. Certainly, for the device B and the device C, a quantity of hops for completing data synchronization is also 2.

It can be learned that for the three collaborative devices, regardless of the near field network state or the far field network state, two hops are needed in both the device to device data transmission manner and the device to cloud data transmission manner.

For example, when the quantity of second electronic devices is 3, the to-be-synchronized data is sent to a third electronic device, a fourth electronic device, and a fifth electronic device via the server, where the third electronic device, the fourth electronic device, and the fifth electronic device belong to the at least one second electronic device.

It should be noted that when the quantity of second electronic devices is 3, a quantity of collaborative devices is 4, and the collaborative devices include the first electronic device, the third electronic device, the fourth electronic device, and the fifth electronic device. In a scenario of collaborative synchronization of four collaborative devices, data may be transmitted in the device to cloud manner regardless of the near field network state or the far field network state. In other words, the first electronic device forwards the to-be-synchronized data to the third electronic device, the fourth electronic device, and the fifth electronic device via the server.

For example, as shown in (d) in FIG. 6, the first electronic device corresponds to the device A, the third electronic device corresponds to the device B, the fourth electronic device corresponds to the device C, and the fifth electronic device corresponds to the device D. When there are four collaborative devices in a near field network scenario, data is transmitted in a device to device manner, and a quantity of hops for the device A to complete data synchronization is 3. Certainly, for the device B, the device C, and the device D, a quantity of hops for completing data synchronization is also 3. As shown in (e) in FIG. 6, the first electronic device corresponds to the device A, the third electronic device corresponds to the device B, the fourth electronic device corresponds to the device C, and the fifth electronic device corresponds to the device D. When there are four collaborative devices in the near field network scenario or the far field network scenario, data is transmitted in a device to cloud manner, and a quantity of hops for the device A to complete data synchronization is 2. Certainly, for the device B, the device C, and the device D, a quantity of hops for completing data synchronization is also 2.

It should be noted that the device to cloud manner is applicable to the near field network state and the far field network state. When the quantity of collaborative devices is greater than or equal to 4, data may be transmitted in the device to cloud manner regardless of the near field network state or the far field network state, to ensure that a quantity of data forwarding times (the quantity of hops) is small in a data transmission process, and reduce a transmission delay and power consumption.

In addition, when the first electronic device is normally synchronized with the at least one second electronic device, the to-be-synchronized data is transmitted to the at least one second electronic device in a second data transmission manner, where a delay of the first data transmission manner is less than a delay of the second data transmission manner.

It should be noted that normal synchronization may be a synchronization manner that has a low data consistency requirement, for example, a projection connection or USB flash drive synchronization.

It may be understood that the first data transmission manner has a higher data consistency requirement than the second data transmission manner. A data consistency requirement may be reflected by using a data synchronization delay. A delay of a transmission manner with a high data consistency requirement is lower than a delay of a transmission manner with a low data consistency requirement.

For example, data consistency of the first data transmission manner is strong eventual consistency, and a data synchronization delay is at a millisecond level. Data consistency of the second data transmission manner is eventual consistency, and a data synchronization delay is at an x-second level.

In other words, when the electronic devices are in the collaborative synchronization scenario, transmitting data in a manner with higher data consistency helps improve user experience in a data synchronization process.

It should be noted that based on the first data transmission manner determined in the foregoing steps, strong eventual consistency data synchronization between electronic devices may be implemented in the collaborative synchronization scenario. Certainly, based on the second data transmission manner determined in the foregoing steps, eventual consistency data synchronization between electronic devices may be implemented in the normal synchronization scenario.

In embodiments provided in this application, whether a plurality of electronic devices are in a collaborative synchronization scenario can be determined, and a specific data transmission manner (transmission strategy) can be determined based on a quantity of electronic devices and/or a network status in the collaborative synchronization scenario. In addition, the data transmission manner in the collaborative synchronization scenario has high data consistency, so that a data synchronization delay is low, power consumption is low, and efficiency is high in the collaborative synchronization scenario, to ensure good user experience.

An embodiment of this application provides a computer program product. When the computer program product runs on a device, the device is enabled to perform the technical solutions of the foregoing embodiments. An implementation principle and technical effect of the computer program product are similar to those in the foregoing method-related embodiments. Details are not described herein again.

An embodiment of this application provides a readable storage medium. The readable storage medium includes instructions. When the instructions are run on a device, the device is enabled to perform the technical solutions of the foregoing embodiments. An implementation principle and technical effect of the readable storage medium are similar. Details are not described herein again. An embodiment of this application provides a chip. The chip is configured to execute instructions. When the chip runs, the technical solutions in the foregoing embodiments are performed. An implementation principle and technical effect of the chip are similar. Details are not described herein again.

A person of ordinary skill in the art may be aware that units and algorithm steps in the examples described based on embodiments disclosed in this specification can be implemented by electronic hardware or a combination of computer software and electronic hardware. Whether the functions are performed in a hardware or software manner depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing apparatus and units (modules), refer to a corresponding process in the foregoing method embodiments, and details are not described herein again.

In the several embodiments provided in this application, it should be understood that the disclosed device, apparatus, and method may be implemented in other manners. For example, the described apparatus embodiment is merely an example. For example, the unit division is merely logical function division and may be another division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, wherein the method is applied to a first electronic device, and the method comprises:
receiving at least one piece of second synchronization information in response to starting a collaborative application, wherein the at least one piece of second synchronization information is synchronization information of at least one second electronic device, and the at least one piece of second synchronization information is in one-to-one correspondence with the at least one second electronic device;
determining, based on the at least one piece of second synchronization information, whether the first electronic device is collaboratively synchronized with the at least one second electronic device;
when the first electronic device is collaboratively synchronized with the at least one second electronic device, determining a first data transmission manner based on a quantity of second electronic devices and/or a network status between the first electronic device and the second electronic device; and
transmitting to-be-synchronized data to the at least one second electronic device in the first data transmission manner.

2. The method according to claim 1, wherein the synchronization information comprises an identifier ID of an electronic device, an ID of the collaborative application, and a data ID, and the data ID indicates data displayed on the electronic device.

3. The method according to claim 1 or 2, wherein before determining the first data transmission manner based on the quantity of second electronic devices and/or the network status between the first electronic device and the second electronic device, the method further comprises:
determining the quantity of second electronic devices based on the at least one piece of second synchronization information; and
determining the network status between the first electronic device and the second electronic device based on the at least one piece of second synchronization information.

4. The method according to claim 3, wherein before determining the quantity of second electronic devices based on the at least one piece of second synchronization information, the method further comprises:
based on consistency of an ID of a collaborative application in first synchronization information with the ID of the collaborative application in the at least one piece of second synchronization information, and consistency of a data ID in the first synchronization information with the data ID in the at least one piece of second synchronization information, determining that the first electronic device is collaboratively synchronized with the at least one second electronic device, wherein the first synchronization information is synchronization information of the first electronic device.

5. The method according to claim 3 or 4, wherein when the quantity of second electronic devices is 1, and the network status between the first electronic device and the second electronic device is a near field network state,
transmitting the to-be-synchronized data to the at least one second electronic device in the first data transmission manner comprises:
sending the to-be-synchronized data to a third electronic device, wherein the third electronic device is one of the at least one second electronic device.

6. The method according to claim 3 or 4, wherein when the quantity of second electronic devices is 1, and the network status between the first electronic device and the second electronic device is a far field network state,
transmitting the to-be-synchronized data to the at least one second electronic device in the first data transmission manner comprises:
sending the to-be-synchronized data to a third electronic device via a server, wherein the third electronic device is one of the at least one second electronic device.

7. The method according to claim 3 or 4, wherein when the quantity of second electronic devices is 3,
transmitting the to-be-synchronized data to the at least one second electronic device in the first data transmission manner comprises:
sending the to-be-synchronized data to a third electronic device, a fourth electronic device, and a fifth electronic device via a server, wherein the third electronic device, the fourth electronic device, and the fifth electronic device belong to the at least one second electronic device.

8. The method according to any one of claims 1 to 7, wherein the method further comprises:
when the first electronic device is normally synchronized with the at least one second electronic device, transmitting the to-be-synchronized data to the at least one second electronic device in a second data transmission manner, wherein
a delay of the first data transmission manner is less than a delay of the second data transmission manner.

9. An electronic device, wherein the electronic device is a first electronic device and comprises:
one or more processors; and
one or more memories, wherein
the one or more memories store one or more computer programs, the one or more computer programs comprise instructions, and when the instructions are executed by the one or more processors, the electronic device is caused to perform the method according to any one of claims 1 to 8.

10. A data transmission apparatus, comprising a processor coupled to a memory, wherein the memory is configured to store a computer program, and the processor is configured to run the computer program, so that the data transmission apparatus performs the method according to any one of claims 1 to 8.

11. A computer-readable storage medium, wherein the computer-readable storage medium stores a computer program; and when the computer program is executed by a computer, the computer is caused to implement the method according to any one of claims 1 to 8.

12. A chip, wherein the chip comprises a processor and a data interface, and the processor reads, through the data interface, instructions stored in a memory, to perform the method according to any one of claims 1 to 8.
